# FASCICULE DE BREVET EUROPEEN

(11) **EP 1 048 968 B1**
(45) Date de publication et mention de la délivrance du brevet: **29.09.2004**
(21) Numéro de dépôt: 00401170.6
(22) Date de dépôt: 27.04.2000
(51) Int. Cl.: G02B 27/02, B60R 11/02, G06F 1/16, B60K 37/02, B60K 35/00

(54) **Dispositif de visualisation d'images ou de caractères**
Anzeigevorrichtung von Bildern oder Zeichen
Device for viewing images or characters

(30) Priorité: 28.04.1999 FR 9905391
(43) Date de publication de la demande: 02.11.2000
(73) Titulaire: FAURECIA Industries, 92100 Boulogne (FR)
(72) Inventeur: Query, Pascal, 70250 Ronchamp (FR); Blaise, Michel, 90100 Delle (FR); Audroumin, Daniel, 25230 Seloncourt (FR)
(74) Mandataire: Jacobson, Claude

(56) Documents cités:
- EP-A- 0 409 232
- WO-A-97/46422
- DE-A- 4 228 605
- US-A- 5 107 402
- US-A- 5 717 566
- PATENT ABSTRACTS OF JAPAN vol. 015, no. 495 (P-1288), 13 décembre 1991 (1991-12-13) & JP 03 215709 A (ALPINE ELECTRON INC), 20 septembre 1991 (1991-09-20)
- PATENT ABSTRACTS OF JAPAN vol. 1998, no. 13, 30 novembre 1998 (1998-11-30) & JP 10 217804 A (NISSAN MOTOR CO LTD), 18 août 1998 (1998-08-18)
- PATENT ABSTRACTS OF JAPAN vol. 1997, no. 12, 25 décembre 1997 (1997-12-25) & JP 09 224202 A (SONY CORP), 26 août 1997 (1997-08-26)

## Description

La présente invention concerne un dispositif de visualisation d'images ou de caractères.

Elle s'applique en particulier à la visualisation d'images ou de caractères dans un véhicule automobile, ces images ou caractères permettant notamment une assistance au guidage du conducteur.

On connaît déjà dans l'état de la technique un dispositif de visualisation d'images ou de caractères, du type comprenant un écran de visualisation d'images ou de caractères, porté par un boîtier articulé autour d'un axe fixe lié à un support, dit axe de boîtier, de façon à pouvoir basculer entre des positions d'utilisation et de rangement de l'écran, cet écran étant protégé par une visière, dite visière d'écran, portée par le boîtier.

Le basculement du boîtier en position de rangement de l'écran permet de libérer le champ de vision du conducteur et, le cas échéant, d'éviter les scintillements et reflets provenant de l'écran qui sont gênants pour le conducteur.

Dans les dispositifs classiques du type précité, la visière d'écran est généralement fixe par rapport au boîtier et de petites dimensions pour en limiter l'encombrement lorsque le boîtier est en position de rangement de l'écran. De ce fait, lorsque le boîtier est en position d'utilisation, les petites dimensions de la visière d'écran limitent l'efficacité de la protection assurée par cet écran contre les rayons du soleil.

L'invention a pour but de proposer un dispositif de visualisation d'images ou de caractères, muni d'une visière d'écran efficace et peu encombrante lorsque le boîtier est en position de rangement de l'écran.

Le document US-A-5 717 566 divulgue une visière dépliable pour ordinateur portable.

A cet effet, l'invention a pour objet un dispositif de visualisation d'images ou de caractères, du type précité, caractérisé en ce que la visière d'écran est articulée autour d'un axe lié au boîtier, dit axe de visière d'écran, sensiblement parallèle à l'axe de boîtier, le dispositif comportant de plus des premiers moyens d'asservissement de la position de la visière d'écran à celle du boîtier, de façon que cette visière d'écran soit dans une position relevée par rapport à cet écran, lorsque le boîtier est en position d'utilisation de l'écran, et dans une position rabattue contre cet écran, lorsque le boîtier est en position de rangement de l'écran.

Suivant d'autres caractéristiques de ce dispositif:
- les premiers moyens d'asservissement comprennent une première bielle munie de deux extrémités articulées respectivement sur le support et la visière d'écran ;
- la première bielle est articulée sur le support autour d'un axe lié au support, dit axe fixe de première bielle, distinct de l'axe de boîtier et sensiblement parallèle à cet axe de boîtier ;
- l'axe de boîtier et l'axe fixe de première bielle sont liés à un flasque, solidaire du support, formant une butée de limitation de la course de la première bielle lorsque le boîtier est en position d'utilisation de l'écran ;
- le boîtier a une forme générale parallélépipèdique, l'écran étant porté par une première face du boîtier sensiblement parallèle à l'axe de boîtier, le boîtier comportant de plus un afficheur de caractères porté par une seconde face de ce boîtier, adjacente à la première face, s'étendant sensiblement parallèlement à l'axe de boîtier, à proximité de l'axe de visière d'écran ;
- l'afficheur est protégé par une visière, dite visière d'afficheur, articulée autour d'un axe lié au boîtier, dit axe de visière d'afficheur, sensiblement parallèle à l'axe de boîtier, le dispositif comportant de plus des seconds moyens d'asservissement de la position de la visière d'afficheur à celle de la visière d'écran, de façon que la visière d'afficheur soit dans une position relevée par rapport à cet afficheur, lorsque la visière d'écran est en position rabattue, et dans une position rabattue par rapport à l'afficheur, lorsque la visière d'écran est en position relevée ;
- les seconds moyens d'asservissement comprennent deux cames complémentaires portées par les visières d'écran et d'afficheur ;
- les seconds moyens d'asservissement comprennent une seconde bielle, munie de deux extrémités articulées respectivement sur les visières d'écran et d'afficheur ;
- la visière d'écran, le flasque et la première bielle sont en plastique et venus de matière entre eux, les axes d'articulation de la première bielle étant matérialisés par des amincissements reliant cette première bielle à la visière d'écran et au flasque ;
- la seconde bielle est en plastique et est venue de matière avec la visière d'écran, l'axe d'articulation de cette seconde bielle sur la visière d'écran étant matérialisé par un amincissement reliant la seconde bielle à la visière d'écran ;
- le support est une partie d'habitacle de véhicule automobile, notamment une planche de bord.

L'invention sera mieux comprise à la lecture de la description qui va suivre, donnée uniquement à titre d'exemple et faite en se référant aux dessins, dans lesquels :

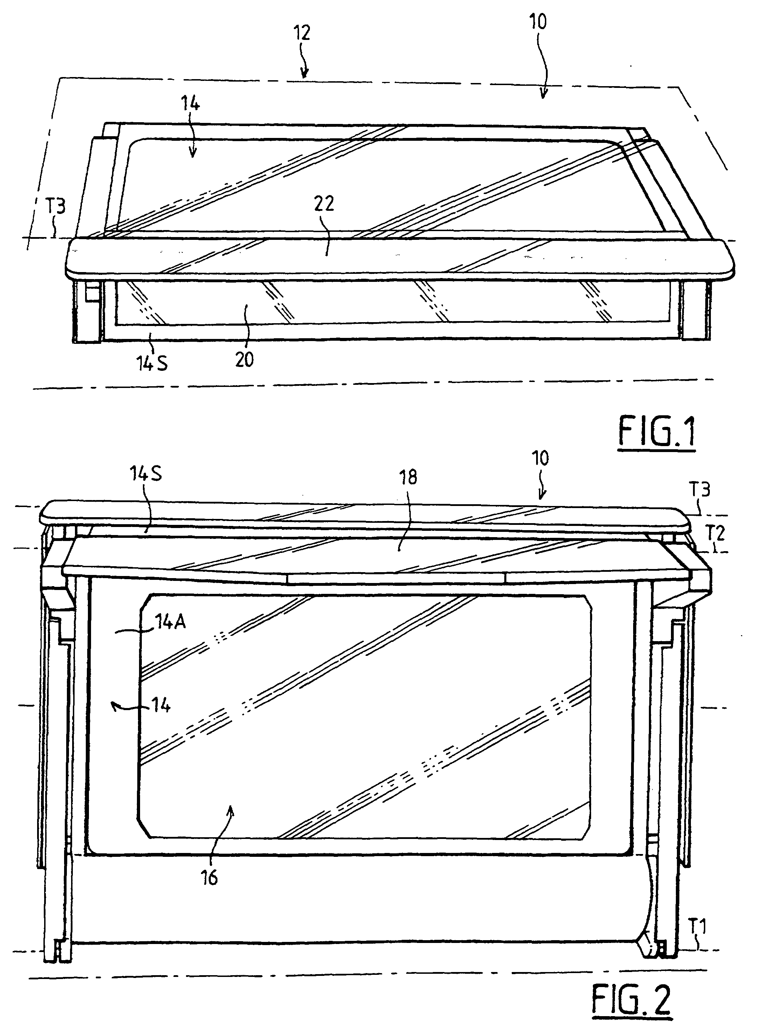

- les figures 1 et 2 sont des vues en perspective, sensiblement de face, d'un dispositif de visualisation d'images ou de caractères selon un premier mode de réalisation de l'invention, le boîtier de ce dispositif étant représenté, sur la figure 1, en position de rangement de l'écran et, sur la figure 2, en position d'utilisation de l'écran ;

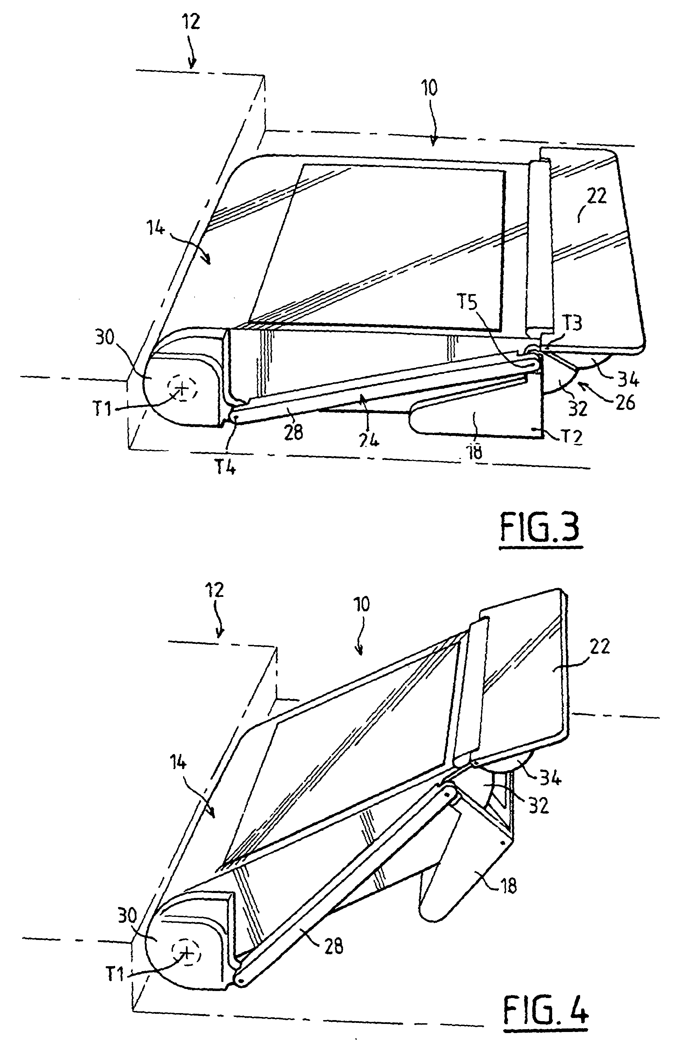

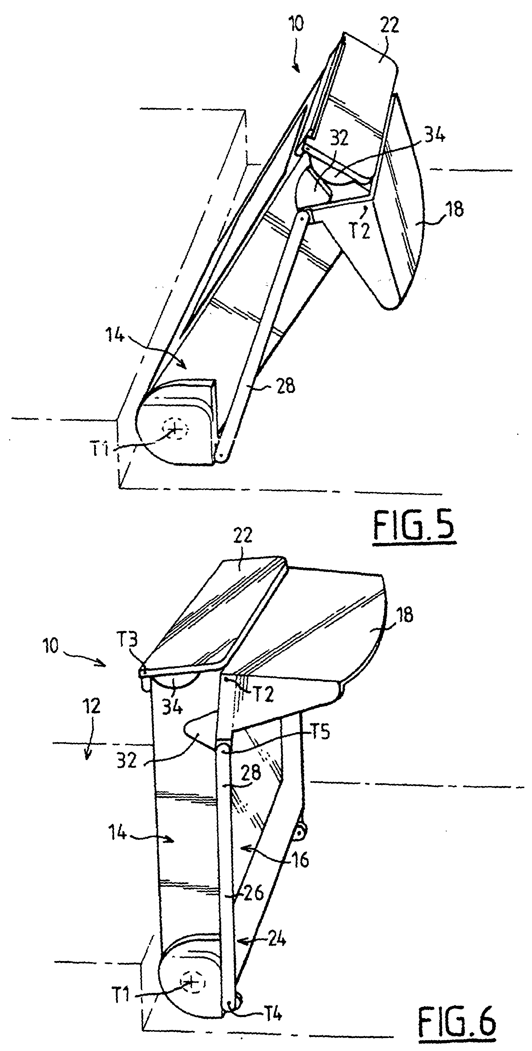

- les figures 3 à 6 sont des vues en perspective, sensiblement de côté, du dispositif de visualisation d'images ou de caractères représenté sur les figures précédentes, dans des positions successives du boîtier, les positions de ce boîtier représentées sur les figures 3 et 6 correspondant respectivement aux positions du boîtier représentées sur les figures 1 et 2;

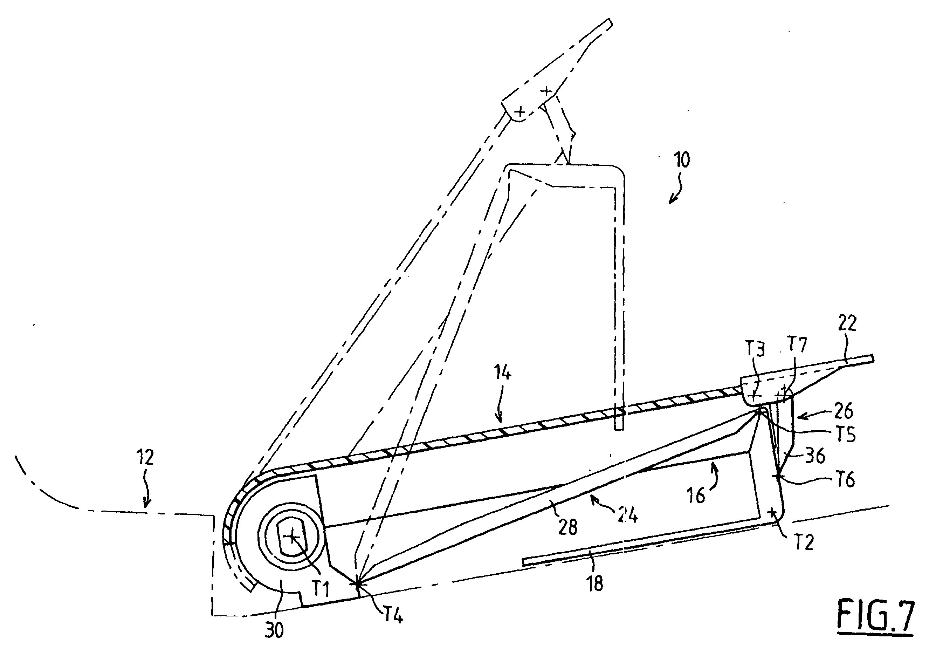

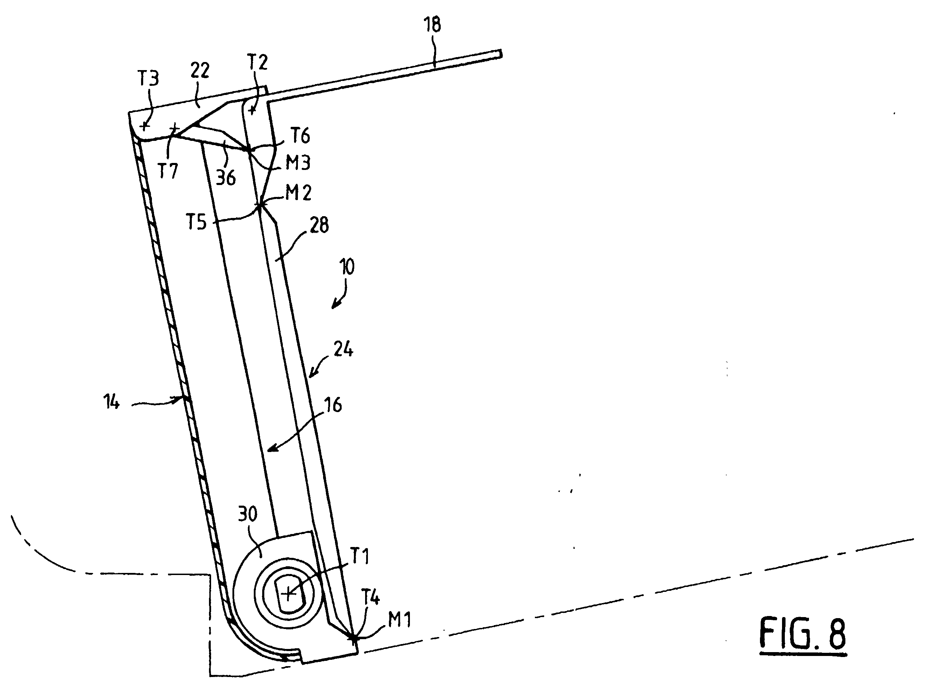

- les figures 7 et 8 sont des vues schématiques de côté d'un dispositif de visualisation d'images ou de caractères selon un second mode de réalisation de l'invention, le boîtier de ce dispositif étant représenté, sur la figure 7, en position de rangement de l'écran et, sur la figure 8, en position d'utilisation de l'écran.

On a représenté, sur les figures 1 à 6, un dispositif de visualisation d'images ou de caractères selon un premier mode de réalisation de l'invention, désigné par la référence générale 10.

Dans l'exemple décrit, le dispositif 10 est agencé dans l'habitacle d'un véhicule automobile, de préférence sur une planche de bord 12 de ce dernier.

Le dispositif 10 comprend un boîtier 14 de forme générale parallélépipèdique portant un écran classique 16 de visualisation d'images ou de caractères (voir notamment figure 2).

Le boîtier 16 est articulé autour d'un axe fixe T1 lié à la planche de bord 12 formant support. Le boîtier 16 peut basculer autour de cet axe T1, appelé axe de boîtier, entre une position de rangement de l'écran 16, sensiblement horizontale, telle que représentée sur les figures 1 et 3, et une position d'utilisation de cet écran 16, sensiblement verticale, telle que représentée sur les figures 2 et 6.

Dans ce qui suit, les orientations, avant, arrière, gauche, droite, inférieure et supérieure, seront considérées par rapport aux orientations de la figure 2 (le boîtier 14 est en position d'utilisation de l'écran 16).

On notera que l'écran 16 est porté par une face avant 14A du boîtier sensiblement parallèle à l'axe de boîtier T1. L'écran 16 est protégé par une visière 18, dite visière d'écran, portée par le boîtier 14.

Le dispositif 10 comporte également un afficheur classique 20 de caractères porté par une face supérieure 14S du boîtier, adjacente à la face avant 14A, s'étendant sensiblement parallèlement à l'axe T1.

L'afficheur 20 est protégé par une visière 22, dite visière d'afficheur, portée par le boîtier 14.

En se référant en particulier aux figures 3 à 6, on voit que la visière d'écran 18 est articulée autour d'un axe T2 lié au boîtier 14, sensiblement parallèle à l'axe de boîtier T1. L'axe T2, dit axe de visière d'écran, s'étend à proximité de la face supérieure 14S du boîtier.

Par ailleurs, la visière d'afficheur 22 est articulée autour d'un axe T3 lié au boîtier 14, sensiblement parallèle à l'axe de boîtier T1. Cet axe T3, dit axe de visière d'afficheur, s'étend sensiblement parallèlement à l'axe de visière d'écran T2, à proximité de la face supérieure 14S.

Le dispositif 10 comprend des premiers moyens 24 d'asservissement de la position de la visière 18 d'écran à celle du boîtier 14 et des seconds moyens 26 d'asservissement de la position de la visière 22 d'afficheur à celle de la visière 18 d'écran.

Dans l'exemple décrit, les moyens d'asservissement 24, 26 sont agencés en double sur les côtés gauche et droit du boîtier 14. En variante, ces moyens d'asservissement 24, 26 pourraient n'être agencés que sur un seul côté gauche ou droit du boîtier 14.

Dans ce qui suit, on décrira uniquement les organes des moyens d'asservissement 24, 26 agencés sur le côté gauche du boîtier 14. Ces organes, clairement visibles sur les figures 3 à 6, sont, de préférence, cachés par des moyens de masquage classiques non représentés sur ces figures.

Les premiers moyens d'asservissement 24 comprennent une bielle 28, munie de deux extrémités articulées respectivement sur un flasque 30, solidaire du support 12, et sur la visière d'écran 18.

La bielle 28 est donc articulée, d'une part, sur le flasque 30 autour d'un axe T4 lié à ce flasque 30, dit axe fixe de bielle 28, distinct de l'axe de boîtier T1 et sensiblement parallèle à cet axe T1, et d'autre part, sur la visière 18 d'écran autour d'un axe T5 lié à cette visière 18.

On notera que l'axe fixe T1 de boîtier est également porté par le flasque 30, l'axe fixe T4 de la bielle 28 étant décalé vers le devant par rapport à l'axe fixe T1.

La bielle 28 asservit la position de la visière 18 d'écran à celle du boîtier 14, de façon que cette visière 18 d'écran soit dans une position rabattue contre écran 16, lorsque le boîtier 14 est en position de rangement de l'écran, comme cela est représenté sur la figure 3, et dans une position relevée par rapport à l'écran 16, lorsque le boîtier 14 est en position d'utilisation de l'écran, comme cela est représenté sur la figure 6.

En considérant cette figure 6, on notera que le flasque 30 forme une butée de limitation de la course de la bielle 28 lorsque le boîtier 14 est en position d'utilisation de l'écran.

Les seconds moyens d'asservissement 26 comprennent deux cames complémentaires 32, 34, solidaires respectivement de la visière 18 d'écran et de la visière 22 d'afficheur. Ces cames 32, 34 coopèrent entre elles de façon que la visière 22 d'afficheur soit dans une position relevée par rapport à l'afficheur 20, lorsque la visière 18 d'écran est en position rabattue, comme cela est représenté sur les figures 1 et 3, et dans une position rabattue par rapport à l'afficheur 20, lorsque la visière 18 d'écran est en position relevée, comme cela est représenté sur les figures 2 et 6.

On décrira ci-dessous les principales particularités du fonctionnement du dispositif de visualisation 10 liées à l'invention.

Initialement, on considère le boîtier 14 dans sa position de rangement de l'écran 16, telle que représentée sur les figures 1 et 3. La visière 18 d'écran est rabattue contre cet écran, par contre, la visière 22 d'afficheur est relevée, ce qui permet à un utilisateur de lire les caractères apparaissant sur cet afficheur.

Pour déplacer le boîtier 14 de sa position de rangement de l'écran vers sa position d'utilisation de cet écran, telle que représentée sur les figures 2 et 6, on entraîne ce boîtier 14 en rotation autour de l'axe T1, vers l'avant, à la main ou à l'aide de moyens classiques motorisés.

Lors de la rotation du boîtier 14 autour de l'axe T1, la bielle 28 et les cames 32, 34 asservissent les déplacements des visières 18, 22 d'écran et d'afficheur aux déplacements du boîtier selon des cinématiques dont des étapes sont illustrées sur les figures 4 et 5.

On notera que lorsque le boîtier 14 est dans sa position d'utilisation de l'écran 16, telle que représentée sur la figure 6, les cames d'asservissement 32, 34 ne coopèrent plus entre elles, la visière 22 d'afficheur étant maintenue en position rabattue par l'effet de la gravité.

Le retour du boîtier 14 en position de rangement de l'écran 16 se fait en déplaçant ce dernier autour de l'axe T1, vers l'arrière, dans un sens inverse au précédent.

Sur les figures 7 et 8, on a représenté un dispositif de visualisation 10 selon un second mode de réalisation de l'invention. Sur ces figures 7 et 8, les éléments analogues à ceux représentés sur les figures précédentes sont désignés par des références identiques.

Dans ce second mode de réalisation de l'invention, la visière 18 d'écran et le flasque 30 sont en plastique. La bielle d'asservissement 28, également en plastique, est venue de matière avec la visière 18 d'écran et le flasque 30. Les axes d'articulation T4, T5 de la bielle 28 sont matérialisés par des amincissements M1, M2 reliant cette bielle 28 à la visière 18 d'écran et au flasque 30.

De plus, dans ce second mode de réalisation de l'invention, les seconds moyens d'asservissement 26 comprennent une bielle 36, munie de deux extrémités articulées respectivement sur les visières 18, 22 d'écran et d'afficheur autour d'axes T6, T7 sensiblement parallèles à l'axe de boîtier T1.

De même que la visière 18 d'écran, la visière 22 d'afficheur est en plastique, la bielle 36, également en plastique, étant venue de matière avec la visière 18 d'écran. L'axe T6 d'articulation de la bielle d'asservissement 36 sur la visière 18 d'écran est matérialisé par un amincissement M3 reliant cette bielle 36 à cette visière 18.

Le fonctionnement du dispositif de visualisation 10 selon le second mode de réalisation de l'invention est analogue à celui selon le premier mode de réalisation de l'invention.

Parmi les avantages de l'invention, on notera qu'elle permet de protéger l'écran au moyen d'une visière de dimensions relativement importantes, de façon à protéger efficacement cet écran contre les rayons du soleil. De plus, lorsque le boîtier est en position de rangement de l'écran, la visière d'écran n'est pas encombrante puisqu'elle est rabattue contre cet écran.

L'invention ne se limite pas aux modes de réalisation décrits ci-dessus. En particulier, l'afficheur 20 est facultatif et peut donc être supprimé ainsi que sa visière 22.

## Revendications

1. Dispositif de visualisation d'images ou de caractères, du type comprenant un écran (16) de visualisation d'images ou de caractères, porté par un boîtier (14) articulé autour d'un axe fixe (T1) lié à un support (12), dit axe de boîtier, de façon à pouvoir basculer entre des positions d'utilisation et de rangement de l'écran (16), cet écran (16) étant protégé par une visière (18), dite visière d'écran, portée par le boîtier (14), **caractérisé en ce que** la visière d'écran (18) est articulée autour d'un axe (T2) lié au boîtier (14), dit axe de visière d'écran, sensiblement parallèle à l'axe de boîtier (T1), le dispositif comportant de plus des premiers moyens (24) d'asservissement de la position de la visière (18) d'écran à celle du boîtier (14), de façon que cette visière (18) d'écran soit dans une position relevée par rapport à cet écran, lorsque le boîtier (14) est en position d'utilisation de l'écran, et dans une position rabattue contre cet écran, lorsque le boîtier (14) est en position de rangement de l'écran.

2. Dispositif selon la revendication 1, **caractérisé en ce que** les premiers moyens d'asservissement (14) comprennent une première bielle (28) munie de deux extrémités articulées respectivement sur le support (12) et la visière (18) d'écran.

3. Dispositif selon la revendication 2, **caractérisé en ce que** la première bielle (28) est articulée sur le support (12) autour d'un axe (T4) lié au support (12), dit axe fixe de première bielle (28), distinct de l'axe (T1) de boîtier et sensiblement parallèle à cet axe (T1) de boîtier.

4. Dispositif selon la revendication 3, **caractérisé en ce que** l'axe (Tl) de boîtier et l'axe fixe (T4) de première bielle sont liés à un flasque (30), solidaire du support (12), formant une butée de limitation de la course de la première bielle (28) lorsque le boîtier (14) est en position d'utilisation de l'écran.

5. Dispositif selon l'une quelconque des revendications précédentes, **caractérisé en ce que** le boîtier (14) a une forme générale parallélépipèdique, l'écran (16) étant porté par une première face (14A) du boîtier sensiblement parallèle à l'axe (T1) de boîtier, le boîtier (14) comportant de plus un afficheur (20) de caractères porté par une seconde face (14S) de ce boîtier, adjacente à la première face (14A), s'étendant sensiblement parallèlement à l'axe (T1) de boîtier, à proximité de l'axe (T2) de visière (18) d'écran.

6. Dispositif selon la revendication 5, **caractérisé en ce que** l'afficheur (20) est protégé par une visière (22), dite visière d'afficheur, articulée autour d'un axe (T3) lié au boîtier (14), dit axe de visière d'afficheur, sensiblement parallèle à l'axe (T1) de boîtier, le dispositif comportant de plus des seconds moyens (26) d'asservissement de la position de la visière (22) d'afficheur à celle de la visière (18) d'écran, de façon que la visière (22) d'afficheur soit dans une position relevée par rapport à cet afficheur, lorsque la visière (18) d'écran est en position rabattue, et dans une position rabattue par rapport à l'afficheur, lorsque la visière (18) d'écran est en position relevée.

7. Dispositif selon la revendication 6, **caractérisé en ce que** les seconds moyens d'asservissement (26) comprennent deux cames complémentaires (32, 34) portées par les visières (18, 22) d'écran et d'afficheur.

8. Dispositif selon la revendication 6, **caractérisé en ce que** les seconds moyens d'asservissement (26) comprennent une seconde bielle (36), munie de deux extrémités articulées respectivement sur les visières (18, 22) d'écran et d'afficheur.

9. Dispositif selon l'une quelconque des revendications 4 à 7, **caractérisé en ce que** la visière (18) d'écran, le flasque (30) et la première bielle (28) sont en plastique et venus de matière entre eux, les axes (T4, T5) d'articulation de la première bielle (28) étant matérialisés par des amincissements (M1, M2) reliant cette première bielle (28) à la visière (18) d'écran et au flasque (30).

10. Dispositif selon les revendications 8 et 9 prises ensemble, **caractérisé en ce que** la seconde bielle (36) est en plastique et est venue de matière avec la visière (18) d'écran, l'axe d'articulation de cette seconde bielle (36) sur la visière (18) d'écran étant matérialisé par un amincissement (M3) reliant la seconde bielle (36) à la visière (18) d'écran.

11. Dispositif selon l'une quelconque des revendications précédentes, **caractérisé en ce que** le support (12) est une partie d'habitacle de véhicule automobile, notamment une planche de bord.

## Patentansprüche

1. Vorrichtung zur Anzeige von Bildern oder von Zeichen des Typs, aufweisend einen Bildschirm (16) zum Anzeigen von Bildern oder von Zeichen, der von einem Gehäuse (14) getragen ist, welches um eine feststehende Achse (T1) schwenkbar ist, welche mit einem Auflager (12) verbunden ist, wobei besagte Gehäuse-Achse derart ist, dass sie zwischen den Anwendungs-Stellungen und der Verstau-Stellung des Bildschirms (16) kippbar ist, wobei dieser Bildschirm (16) von einem Visier (18) geschützt ist, wobei besagtes Bildschirm-Visier von dem Gehäuse (14) getragen ist, **dadurch gekennzeichnet, dass** das Bildschirm-Visier (18) um eine mit dem Gehäuse (14) verbundene Achse (T2) schwenkbar ist, wobei besagte Bildschirm-Visier-Achse im Wesentlichen parallel zur Gehäuse-Achse (T1) ist, die Vorrichtung außerdem Mittel (24) zum Steuern der Stellung des Bildschirm-Visiers (18) zu derjenigen des Gehäuses (14) aufweist, derart, dass das Bildschirm-Visier (18) in einer Aufklapp-Stellung bezüglich des Bildschirms ist, wenn das Gehäuse (14) in der Bildschirm-Anwendungs-Stellung ist, und in einer Einklapp-Stellung gegen den Bildschirm ist, wenn das Gehäuse (14) in der Bildschirm-Verstau-Stellung ist.

2. Vorrichtung gemäß Anspruch 1, **dadurch gekennzeichnet, dass** die ersten Mittel (24) zum Regeln eine erste Koppelstange (28) aufweisen, die mit zwei Enden versehen ist, die an dem Auflager (12) bzw. dem Bildschirm-Visier (18) schwenkbar sind.

3. Vorrichtung gemäß Anspruch 2, **dadurch gekennzeichnet, dass** die erste Koppelstange (28) an dem Auflager (12) um eine Achse (T4) schwenkbar ist, welche mit dem Auflager (12) verbunden ist, wobei besagte feststehende Achse der ersten Koppelstange (28) verschieden zu der Achse (T1) des Gehäuses und im Wesentlichen parallel zu der Gehäuse-Achse (T1) ist.

4. Vorrichtung gemäß dem Anspruch 3, **dadurch gekennzeichnet, dass** die Gehäuse-Achse (T1) und die feststehende Achse (T4) der ersten Koppelstange mit einem mit dem Auflager (12) einstückigen Flansch (30) verbunden sind, welcher einen Begrenzungsanschlag des Umlaufs der ersten Koppelstange (28) bildet, wenn das Gehäuse (14) in der Bildschirm-Anwendungs-Stellung ist.

5. Vorrichtung gemäß irgendeinem der vorhergehenden Ansprüche, **dadurch gekennzeichnet, dass** das Gehäuse (14) eine im Wesentliche parallelepipede Gestalt hat, der Bildschirm (16) von einer ersten Seite (14A) des Gehäuses gehalten ist, die im Wesentlichen parallel zu der Achse (T1) des Gehäuses ist, wobei das Gehäuse (14) außerdem ein Zeichen-Anzeigegerät (20) aufweist, welches von einer zweiten Seite (14S) von dem Gehäuse gehalten ist, welche zu der ersten Seite (14A) angrenzend ist, sich im Wesentlichen parallel zur Achse (T1) des Gehäuses in Nähe der Achse (T2) des Bildschirm-Visiers (18) erstreckt.

6. Vorrichtung gemäß Anspruch 5, **dadurch gekennzeichnet, dass** das Anzeigegerät (20) von einem Visier (22) geschützt ist, wobei besagtes Anzeigegerät-Visier um eine Achse (T3) schwenkbar ist, die mit dem Gehäuse (14) verbunden ist, wobei besagte Achse des Anzeigegerät-Visiers im Wesentlichen parallel zu der Achse (T1) des Gehäuses ist, die Vorrichtung außerdem zweite Mittel (26) aufweist zum Steuern der Stellung des Anzeigegerät-Visiers (22) zu derjenigen des Bildschirm-Visiers (18), derart, dass das Anzeigegerät-Visier (22) in einer Aufklapp-Stellung bezüglich des Anzeigegerätes ist, wenn das Bildschirm-Visier (18) in der Einklapp-Stellung ist, und in einer Einklapp-Stellung bezüglich des Anzeigegerätes ist, wenn das Bildschirm-Visier (18) in der Aufklapp-Stellung ist.

7. Vorrichtung gemäß Anspruch 6, **dadurch gekennzeichnet, dass** die zweiten Steuermittel (26) zwei komplementäre Nocken (32, 34) aufweisen, die von den Visieren (18, 22) des Bildschirms und des Anzeigegeräts getragen sind.

8. Vorrichtung gemäß Anspruch 6, **dadurch gekennzeichnet, dass** die zweiten Steuermittel (26) eine zweite Koppelstange (36) aufweisen, die mit zwei Enden versehen ist, welche an den Visieren (18, 22) des Bildschirms bzw. des Anzeigegeräts schwenkbar sind.

9. Vorrichtung gemäß irgendeinem der Ansprüche 4 bis 7, **dadurch gekennzeichnet, dass** das Bildschirm-Visier (18), der Flansch (30) und die erste Koppelstange (28) aus Kunststoff sind und miteinander einstückig sind; die Gelenkachsen (T4, T5) der ersten Koppelstange (28) von Verjüngungen (M1, M2) verwirklicht sind, welche die erste Koppelstange (28) an dem Bildschirm-Visier (18) und dem Flansch (30) befestigen.

10. Vorrichtung gemäß dem kombinierten Satz Ansprüche 8 und 9, **dadurch gekennzeichnet, dass** die zweite Koppelstange (36) aus Kunststoff ist und einstückig mit dem Bildschirm-Visier (18) ist, wobei die Gelenkachse von der zweiten Koppelstange (36) an dem Bildschirm-Visier (18) von einer Verjüngung (M3) verwirklicht ist, welche die zweite Koppelstange (36) an dem Bildschirm-Visier (18) befestigt.

11. Vorrichtung gemäß irgendeinem der vorhergehenden Ansprüche, **dadurch gekennzeichnet, dass** das Auflager (12) ein Teil der Fahrgastzelle eines Kraftfahrzeuges ist, insbesondere eines Armaturenbretts.

## Claims

1. Apparatus for displaying images or characters, of the type comprising an image or character display screen (16), carried by a housing (14) articulated about a fixed spindle (T1) attached to a support (12) known as the housing spindle, so as to be capable of pivoting between positions of use and storage of the screen (16), this screen (16) being protected by a visor (18) known as the screen visor, carried by the housing (14), **characterised in that** the screen visor (18) is articulated about a spindle (T2) attached to the housing (14), known as the screen visor spindle, substantially parallel to the housing spindle (T1), the apparatus further comprising first means (24) for enslaving the position of the screen visor (18) to that of the housing (14), so that this screen visor (18) is in a raised position relative to this screen when the housing (14) is in the position of use of the screen, and in a retracted position against said screen when the housing (14) is in the storage position of the screen.

2. Apparatus according to claim 1, **characterised in that** the first enslaving means (24) comprise a first connecting rod (28) having two ends articulated respectively on the support (12) and the screen visor (18).

3. Apparatus according to claim 2, **characterised in that** the first connecting rod (28) is articulated on the support (12) about a spindle (T4) attached to the support (12), known as the fixed spindle of the first connecting rod (28), separate from the housing spindle (T1) and substantially parallel to said housing spindle (T1).

4. Apparatus according to claim 3, **characterised in that** the housing spindle (T1) and the fixed spindle (T4) of the first connecting rod are attached to a flange (30) integral with the support (12), forming an abutment to limit the travel of the first connecting rod (28) when the housing (14) is in the position of use of the screen.

5. Apparatus according to any one of the preceding claims, **characterised in that** the housing (14) is generally parallelepiped in shape, the screen (16) being carried by a first side (14A) of the housing substantially parallel to the housing spindle (T1), the housing (14) further comprising a character display (20) carried by a second side (14S) of said housing adjacent to the first side (14A), extending substantially parallel to the housing spindle (T1), close to the spindle (T2) of the screen visor (18).

6. Apparatus according to claim 5, **characterised in that** the display (20) is protected by a visor (22), known as the display visor, articulated about a spindle (T3) attached to the housing (14), known as the display visor spindle, substantially parallel to the housing spindle (T1), the apparatus further comprising second means (26) for enslaving the position of the display visor (22) to that of the screen visor (18), so that the display visor (22) is in a raised position relative to this display when the screen visor (18) is in the retracted position, and in a retracted position relative to the display when the screen visor is in the raised position.

7. Apparatus according to claim 6, **characterised in that** the second enslaving means (26) comprise two complementary cams (32, 34) carried by the screen and display visors (18, 22).

8. Apparatus according to claim 6, **characterised in that** the second enslaving means (26) comprise a second connecting rod (36) having two ends which are articulated respectively on the screen and display visors (18, 22).

9. Apparatus according to any one of claims 4 to 7, **characterised in that** the screen visor (18), the flange (30) and the first connecting rod (28) are made of plastics and are integrally formed, the articulation spindles (T4, T5) of the first connecting rod (28) being formed by thinner portions (M1, M2) connecting this first connecting rod (28) to the screen visor (18) and flange (30).

10. Apparatus according to claims 8 and 9 taken together, **characterised in that** the second connecting rod (36) is made of plastics and is integrally formed with the screen visor (18), the articulation spindle of this second connecting rod (36) on the screen visor (18) being formed by a thinner portion (M3) connecting the second connecting rod (36) to the screen visor (18).

11. Apparatus according to any one of the preceding claims, **characterised in that** the support (12) is part of a motor vehicle interior, notably a dashboard.
